(19) Europäisches Patentamt
European Patent Office
Office européen des brevets

(11) **EP 4 119 606 A1**

(12) **EUROPEAN PATENT APPLICATION**

(43) Date of publication:
**18.01.2023 Bulletin 2023/03**

(21) Application number: **22182578.9**

(22) Date of filing: **01.07.2022**

(51) International Patent Classification (IPC):
***C08J 9/12*** *(2006.01)*

(52) Cooperative Patent Classification (CPC):
**C08J 9/122;** C08J 2201/024; C08J 2201/026;
C08J 2201/03; C08J 2203/06; C08J 2367/04

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **13.07.2021 JP 2021115848**

(71) Applicant: **Ricoh Company, Ltd.**
**Tokyo 143-8555 (JP)**

(72) Inventor: **Miki, Tomoharu**
**Tokyo, 143-8555 (JP)**

(74) Representative: **Marks & Clerk LLP**
**15 Fetter Lane**
**London EC4A 1BW (GB)**

(54) **FOAM SHEET, PRODUCT, AND METHOD FOR PRODUCING FOAM SHEET**

(57) A foam sheet includes a composition containing an aliphatic polyester resin, and the foam sheet has a surface roughness Sa (i.e. arithmetic average height) of 81 $\mu$m or higher.

# FIG. 1

**Description**

BACKGROUND

Technical Field

The present disclosure relates to a foam sheet, a product, and a method for producing a foam sheet.

Description of the Related Art

Plastic products processed into various shapes such as bags, trays and containers are widely distributed. However, most of these plastic products are difficult to decompose in nature and therefore problematic in waste disposal after the end of use.

Thus, materials for the plastic products are actively developed to replace nondegradable plastics difficult to decompose in nature with biodegradable plastics degradable in nature. Such plastic products are processed into various shapes such as bags and containers and widely distributed. Above all, foam sheets produced by foaming plastics are used as cushioning materials, food containers or the like because of excellent heat insulation and cushioning performance as well as light weight.

WO2019/073873 discloses a polyolefin-based resin foam that has a water cutoff property and excellent flexibility, cushioning performance and heat resistance and can be suitably used for various sealing substrates despite a small thickness. The polyolefin-based resin foam contains a polyolefin-based resin and a thermoplastic elastomer and is characterized in that endothermic peaks according to a differential scanning calorimetry (DSC) are at least 110°C or higher and 143°C or lower, and 153°C or higher, and 30% by mass or more and 60% by mass or less of thermoplastic elastomer-based resin is contained in 100% by mass of the resin constituting the foam. In addition, WO2019/073873 discloses the foam in which both a right face and a reverse face have a surface roughness Sa (arithmetic average height) of 5 $\mu$m or higher and 80 $\mu$m or lower, and when the surface roughness Sa is higher than 80 $\mu$m, a surface smoothness decreases, and a production cost increases in a case of using the foam as an adhesive tape.

However, the foam disclosed in WO2019/073873 is still insufficient in the cushioning performance. Although there has been a tendency that surface uniformity is required for conventional cushioning sheets, a foam sheet having a uniform surface is insufficient to achieve a sufficient cushioning performance even in a thin sheet or a low expansion ratio sheet. When attempting to increase a cushioning performance in a foam sheet having a uniform surface, the sheet must be thickened, and therefore an amount of raw materials required increases, leading to increase in production cost.

SUMMARY

Thus, an object of the present invention is to provide a foam sheet that can reduce an amount of raw materials and has a high cushioning performance.

To solve the above problems, the foam sheet according to embodiments of the present invention includes a composition containing an aliphatic polyester resin and having a surface roughness Sa of 81 $\mu$m or higher.

Embodiments of the present invention further provides a product containing the above foam sheet.

Embodiments of the present invention further provides a method for producing a foam sheet. The method includes: kneading an aliphatic polyester resin at a temperature lower than a melting point of the aliphatic polyester resin in the presence of a compressible fluid to obtain a composition; removing the compressible fluid to foam the composition to form a sheet; and adjusting a surface of the sheet to have a surface roughness Sa of 81 $\mu$m or higher.

Embodiments of the present invention provide a foam sheet that can reduce an amount of raw materials and has a high cushioning performance.

BRIEF DESCRIPTION OF THE DRAWINGS

A more complete appreciation of the disclosure and many of the attendant advantages and features thereof can be readily obtained and understood from the following detailed description with reference to the accompanying drawings, wherein:

FIG. 1 is a schematic diagram illustrating a kneading device according to embodiments of the present invention;
FIG. 2 is a schematic diagram illustrating a foam sheet forming device according to embodiments of the present invention; and
FIG. 3 is a schematic diagram illustrating a surface adjusting device according to embodiments of the present invention.

The accompanying drawings are intended to depict embodiments of the present invention and should not be interpreted to limit the scope thereof. The accompanying drawings are not to be considered as drawn to scale unless explicitly noted.

DETAILED DESCRIPTION

The terminology used herein is for the purpose of describing particular embodiments only and is not intended to be limiting of the present invention. As used herein, the singular forms "a," "an," and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

Embodiments of the present invention are described in detail below with reference to accompanying drawings. In describing embodiments illustrated in the drawings, specific terminology is employed for the sake of clarity. However, the disclosure of this patent specification is not intended to be limited to the specific terminology so selected, and it is to be understood that each specific element includes all technical equivalents that have a similar function, operate in a similar manner, and achieve a similar result.

For the sake of simplicity, the same reference number will be given to identical constituent elements such as parts and materials having the same functions and redundant descriptions thereof omitted unless otherwise stated.

A foam sheet, a product, and a method for producing a foam sheet according to embodiments of the present invention will be explained below with reference to the drawings. It is to be noted that the present invention is not limited to the following embodiments, and changes such as other embodiments, addition, modification and deletion can be made within a scope that can be conceived by a person skilled in the art, and any aspect is included within the scope of the present invention as long as the actions and effects of the present invention are exhibited.

(Foam Sheet and Method for Producing Foam Sheet)

The foam sheet according to embodiments of the present invention is characterized by including a composition containing an aliphatic polyester resin and having a surface roughness Sa (arithmetic average height) of 81 $\mu$m or higher.

The method for producing a foam sheet according to embodiments of the present invention includes: a kneading process of kneading an aliphatic polyester resin at a temperature lower than a melting point of the aliphatic polyester resin in the presence of a compressible fluid to obtain a composition; a foaming process of removing the compressible fluid to foam the composition to form a sheet; and a surface adjusting process of adjusting a surface of the sheet. The surface adjusting process is characterized in that the sheet is adjusted to have a surface roughness Sa (arithmetic average height) of 81 $\mu$m or higher. The method for producing a foam sheet according to embodiments of the present invention may further include other processes as necessary. The kneading process and the foaming process may be performed simultaneously or as separate processes.

Major factors for the sheet to exhibit functions as a cushioning material include a cushioning performance of the sheet itself (e.g. expansion ratio, parameters depending on properties of raw materials) and a thickness of the sheet, but a thin sheet is insufficient in the cushioning performance. On the other hand, a thick sheet ensures cushioning performance, but requires more raw materials than sheets with irregularity. By contrast, the foam sheet according to embodiments of the present invention has irregularity on the sheet surface , which can decrease the amount of the raw materials and improve the cushioning performance.

<Kneading Process>

In the kneading process, an aliphatic polyester resin is kneaded in the presence of a compressible fluid at a temperature lower than the melting point of the aliphatic polyester resin to obtain a composition.

In the kneading process, a foam core material, a foaming agent, other polymers or resins, or the like may be used as necessary. In addition, a crosslinking agent, an antioxidant, a colorant, absorbers for various rays, an antistatic agent, a conductive material or the like may be used depending on an application of the formed product. In the kneading process, for example, the foaming can be promoted more efficiently by using the foaming agent. Also, use of the compressible fluid promotes the foaming or the kneading more efficiently.

The composition of the present embodiment refers to a composition that contains an aliphatic polyester resin and has not yet foamed. When the foam core material and the crosslinking agent are used in the kneading process, the composition may be obtained by simultaneously kneading the aliphatic polyester resin, the foam core material and the crosslinking agent, or alternatively by kneading the aliphatic polyester resin and the foam core material to form a composition precursor and then adding the crosslinking agent to the composition precursor. The composition precursor may be referred to as a master batch, or a product obtained by subjecting the composition precursor to a processing such as pelletization may be referred to as a master batch.

<<Aliphatic Polyester Resin>>

Examples of the aliphatic polyester resin include, but are not limited to, polylactic acid, polyglycolic acid, poly(3-hydroxybutyrate), poly(3-hydroxybutyrate-3-hydroxyhexanoate), poly(3-hydroxybutyrate-3-hydroxyvalerate), polycaprolactone, polybutylene succinate, and poly(butylene succinate-adipate).

The aliphatic polyester resin is suitably used as a biodegradable resin that is biodegraded by microorganisms or as an environmentally friendly polymer material with low environmental load. Above all, the polylactic acid is particularly preferable because it is advantageously a carbon-neutral material and relatively inexpensive. In some cases, the composition containing the polylactic acid is referred to as a polylactic acid composition.

The polylactic acid is one of the aliphatic polyester resins and refers to a polymer formed by polymerization of lactic acid through ester bonds. Since the polylactic acid is biodegraded by microorganisms, the polylactic acid is attracting attention as an environmentally friendly polymer material with low environmental load (see "Structure, Physical Properties, and Biodegradability of Aliphatic Polyesters", KOBUNSHI (POLYMERS, Japan), Vol. 50, 2001, p. 374-377, No. 6). A lactic acid constituting the polylactic acid may be either or both of D-form (D-lactic acid) and L-form (L-lactic acid).

Examples of the polylactic acid include, but are not limited to, a D-lactic acid homopolymer, an L-lactic acid homopolymer, a copolymer of a D-lactic acid and an L-lactic acid (DL-lactic acid), and a ring-opened polymer of one or more lactides selected from the group consisting of a D-lactide, an L-lactide and a DL-lactide. Each of these polylactic acids can be used alone or in combination with others.

When using a copolymer of a D-lactic acid and an L-lactic acid as the polylactic acid, a ratio of the D-lactic acid between the L-lactic acid is not particularly limited and can be selected as appropriate depending on an intended purpose. In the copolymer of the D-lactic acid and the L-lactic acid, there is a tendency that as the lesser optical isomer decreases, a crystallinity, a melting point, and a glass transition point of the copolymer become higher. Also, there is a tendency that as the lesser optical isomer increases, the crystallinity become lower, and eventually the copolymer becomes amorphous. Since the crystallinity is associated with heat resistance of the foam sheet and a foaming temperature, the copolymer only needs to be used according to an intended purpose, and the crystallinity is not particularly limited.

Note that the crystallinity means a degree of crystallinity and/or crystallization speed. High crystallinity means at least one of high degree of crystallinity and high crystallization speed.

The polylactic acid may be a product synthesized as appropriate, or a commercially available product.

From the viewpoint of biodegradability and recyclability, it is preferable that a proportion of the polylactic acid to all organic matters contained in the foam sheet be preferably 98% by mass or more, more preferably 99% by mass or more. When the proportion of the polylactic acid is 98% by mass or more, even if the polylactic acid is biodegraded, other components that have not biodegraded can be prevented from remaining. It is preferable that a proportion of aliphatic polyester resins other than the polylactic acid be equal to that of the polylactic acid.

<<Foam Core Material (Filler)>>

A foam core material (hereinafter, referred to as a filler in some cases) may be contained in the foam sheet for the purpose of adjusting the foamed state (size, amount and arrangement of bubbles) of the foam sheet, reducing the cost and improving the strength.

Examples of the fillers include, but are not limited to, inorganic fillers and organic fillers. Each of these fillers can be used alone or in combination with others.

Examples of the inorganic fillers include, but are not limited to, talc, kaolin, calcium carbonate, layered silicate, zinc carbonate, wollastonite, silica, alumina, magnesium oxide, calcium silicate, sodium aluminate, calcium aluminate, sodium alumino silicate, magnesium silicate, glass balloon, carbon black, zinc oxide, antimony trioxide, zeolite, hydrotalcite, metal fiber, metal whisker, ceramic whisker, potassium titanate, boron nitride, graphite, glass fiber, and carbon fiber.

Examples of the organic fillers include, but are not limited to, naturally occurring polymers such as starch, cellulose fine particles, wood powder, soybean curd refuse, rice husk and wheat bran, and modified products thereof, as well as a sorbitol compound, benzoic acid and a metal salt of the compound, a phosphate ester metal salt, a rosin compound.

Above all, silica that is an inorganic filler is preferable for its high affinity with the compressible fluid as described below. When using a filler other than silica as a base, a filler having a surface treated with silica is preferable.

The proportion of the foam core material in the foam sheet can be selected as appropriate, but is preferably 0.5% by mass or less. In this case, uniform foaming is facilitated. A lower limit value of the proportion in the foam sheet can be selected as appropriate, but is preferably 0.05% by mass or more.

<<Crosslinking Agent>>

The crosslinking agent can be selected as appropriate. As the crosslinking agent, for example, a (meth)acrylic ester compound having two or more (meth)acrylic groups in the molecule, or a (meth)acrylic ester compound having one or more (meth)acrylic groups and one or more glycidyl or vinyl groups are suitably used. In cases of these crosslinking agents, advantages of high reactivity with polylactic acids, small monomer residues and reduced resin coloration can be obtained.

Specific Examples of these compounds include, but are not limited to, glycidyl methacrylate, glycidyl acrylate, glycerol dimethacrylate, trimethylolpropane trimethacrylate, trimethylolpropane triacrylate, allyloxy polyethylene glycol monoacrylate, allyloxy polyethylene glycol monomethacrylate, polyethylene glycol dimethacrylate, polyethylene glycol diacrylate, polypropylene glycol dimethacrylate, polypropylene glycol diacrylate, polytetramethylene glycol dimethacrylate, and an alkylene copolymer in which alkylene glycol portions of these compounds have various lengths, as well as butanediol methacrylate and butanediol acrylate. A compound having a glycidyl group is also referred to as a glycidyl compound.

When the composition contains a crosslinking agent, a melt tension can be provided, and an expansion ratio of the foam sheet can be adjusted. Examples of a means for providing the melt tension include a method of dispersing the foam core material such as a layered silicate at nano level, a method of crosslinking the resin composition using a crosslinking agent, a crosslinking assistant or the like, a method of crosslinking the resin composition using an electron beam or the like, a method of adding another resin composition having a high melt tension, and the like.

<<Foaming Agent>>

In terms of the ease of obtaining a foam sheet having a high expansion ratio, examples of the foaming agent include, but are not limited to: a hydrocarbon e.g. a lower alkane such as propane, n-butane, isobutane, n-pentane, isopentane and hexane; an ether such as dimethyl ether; a halogenated hydrocarbon such as methyl chloride and ethyl chloride; a physical foaming agent such as a compressible gas of carbon dioxide or nitrogen. Above all, the compressible gas of carbon dioxide or nitrogen is suitably used in terms of no odor, safe handling and low environmental load.

<<Other Polymers or Resins>>

In addition to the aliphatic polyester resin, other polymers or resins may be used. Examples of other polymers or resins include, but are not limited to: a styrene-based homopolymer such as polystyrene and poly-p-methylstyrene; a styrene-based copolymer such as a styrene-maleic anhydride copolymer, a styrene-acrylonitrile copolymer, a styrenebutadiene copolymer, a styrene-acrylonitrile-butadiene copolymer, a styrene-acrylic acid copolymer and a styrene-methacrylic acid copolymer; a styrene-based resin such as a mixture of polystyrene and polyphenylene oxide.

<<Compressible Fluid>>

Examples of substances that can be used in a state of the compressible fluid include, but are not limited to, carbon monoxide, carbon dioxide, dinitrogen monoxide, nitrogen, methane, ethane, propane, 2,3-dimethylbutane, ethylene, and dimethyl ether. Above all, carbon dioxide is preferable because it can easily create a supercritical state owing to a critical pressure of about 7.4 MPa and a critical temperature of about 31°C and can be easily handled owing to incombustibility. Each of these compressible fluids can be used alone or in combination with others.

Since the solubility of the compressible fluid varies depending on the type of resin used in combination with the compressible fluid, a temperature and a pressure, an amount of the fed compressible fluid should be adjusted as appropriate. For example, in a case of a combination of polylactic acid and carbon dioxide, the amount of the compressible fluid is preferably 2% by mass or more and 30% by mass or less. When the amount of the fed carbon dioxide is 2% by mass or more, it is possible to prevent a defect that the plasticization effects are limited. When the amount of the fed carbon dioxide is 30% by mass or less, it is possible to prevent defects that carbon dioxide and the polylactic acid are phase-separated and a foam sheet having a uniform thickness cannot be obtained.

<Total Amount of Organic Matter and Amount of Inorganic Foam Core Material>

A total amount of organic matters in the foam sheet can be estimated as an amount of components other than an ash content (i.e. amount of inorganic components). The amount of the ash content can be considered as an amount of the inorganic foam core material. The ash content is a residue resulting from combustion of the foam sheet at 600°C for 4 hours.

The ash content is measured as follows. About 3 g of the foam sheet sample was weighed and put into a 100-mL crucible precisely weighed up to four decimal places by a precision balance. A total weight of the crucible and the sample was precisely weighed. The crucible was put into a muffle furnace FP-310 manufactured by Yamato Scientific Co., Ltd. and fired at 600°C for 4 hours to combust the organic components. Then the crucible was cooled in a desiccator for one hour and weighed again to determine the total weight of the crucible and the ash content.

The amount of the ash content i.e. the inorganic foam core material, and the total amount of the organic matters are calculated according to the following equations.

$$\text{Amount of inorganic foam core material [\%]} = \text{amount of ash content [\%]} = (\text{total}$$

$$\text{weight [g] of crucible and sample after combustion and cooling - weight [g] of crucible)} /$$

$$(\text{total weight [g] of crucible and sample before combustion)} - \text{weight [g] of crucible}) \times 100$$

$$\text{Total amount of organic matters [\%]} = 100 - \text{amount of ash content [\%]}$$

The above measurements were performed with n = 2 (i.e. twice) and an average value was determined.

<<Kneading Device>>

A kneading device used for producing the composition may employ either a continuous process or a batch process. Preferably, the reaction process is selected as appropriate considering the device efficiency, the property and quality of the products, or the like.

Examples of the kneading device include, but are not limited to, single-screw extruders, multi-screw extruders, kneaders, non-screw cage-type stirring tanks, BIVOLAK manufactured by Sumitomo Heavy Industries, Ltd., N-SCR manufactured by Mitsubishi Heavy Industries, Ltd., glasses-like blades and lattice blades manufactured by Hitachi, Ltd., and tube-type polymerization tanks equipped with Kenix-type or Sulzer-type SMLX static mixer, all of which are applicable to viscosities suitable for kneading. In terms of color tone, a self-cleaning polymerization device such as a finisher, N-SCR and a twin-screw extruder can be used. Above all, the finisher and N-SCR are preferable in terms of color tone, stability and heat resistance of the resin. In terms of production efficiency, the single-screw and multi-screw extruders are preferable.

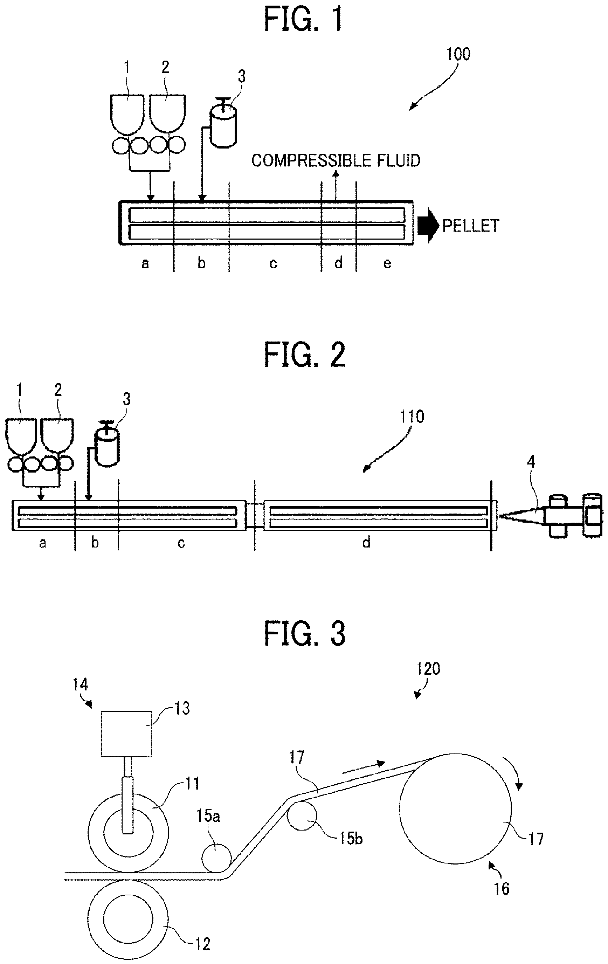

FIG. 1 is a diagram illustrating an example of the kneading device. As a continuous kneading device 100 illustrated in FIG. 1, for example, a twin-screw extruder (manufactured by THE JAPAN STEEL WORKS, LTD.) can be used. For example, the continuous kneading device 100 has a screw diameter of 42 mm and an L/D of 48. In this example, raw materials such as a polylactic acid and a filler are fed to a raw material mixing/melting area a from a first feeding portion 1 and a second feeding portion 2, and mixed/melted. A compressible fluid is fed to the mixed/melted raw materials by a compressible fluid feeding portion 3 in a compressible fluid feeding area b. Then, the raw materials are kneaded in a kneading area c. Subsequently, the compressible fluid is removed in a compressible fluid removing area d, and then formed into e.g. a pellet form in a molding area e. In this way, a master batch can be prepared as a composition precursor.

The compressible fluid (liquid material) is fed e.g. by a metering pump, and solid raw materials such as resin pellets and fillers are fed e.g. by a fixed-quantity feeder.

- Raw Material Mixing/Melting Area -

In the raw material mixing/melting area, for example, the resin pellet and the filler are mixed, and the temperature is raised. The heating temperature is set to be equal to or higher than a melting temperature of the resin so that the raw materials can be uniformly mixed with the compressible fluid in the subsequent compressible fluid feeding area.

- Compressible Fluid Feeding Area -

The resin pellet is melted by heating, and the compressible fluid is fed while the filler is in a wet state, so that the melted resin is plasticized.

Wetting the filler means e.g. a state that the filler is uniformly mixed with the resin and melted.

- Kneading Area -

The temperature of the kneading area is set such that the viscosity becomes suitable for kneading the filler.

The preset temperature is not particularly limited and can be changed as appropriate because the temperature depends on specifications of a reactor, a type, a structure and a molecular weight of the resin, or the like. For example, when using a commercially available polylactic acid with a weight average molecular weight (Mw) of about 200,000, kneading is commonly carried out at a temperature higher by 10°C to 20°C from the melting point of the polylactic acid.

By contrast, according to embodiments of the present invention, the resin is kneaded at a temperature lower than the melting point of the aliphatic polyester resin (e.g. polylactic acid). The resin can be kneaded at a temperature lower than the melting point of the polylactic acid by being kneaded with the compressible fluid. Also, the resin can be kneaded with a relatively high viscosity at the temperatures lower than the melting point.

Specifically, the temperature is preferably a temperature lower by 20°C to 80°C from the melting point of the polylactic acid, more preferably a temperature lower by 30°C to 60°C from the melting point. For simplicity, the temperature can be set using a current value for an agitation power of the device, or the like as a measure.

<Foaming Process>

In the foaming process, a sheet is formed by removing the compressible fluid to foam the composition.

The foaming process and the sheet forming process may be separated. In the foaming process, for example, a foaming agent is caused to expand to foam the composition.

In the case of the compressible fluid, the expanding and foaming agent can be removed by releasing the pressure. As for the temperature in the foaming process, it is preferable that the composition is heated to a temperature in a range where the aliphatic polyester resin can be plasticized so as to be extrudable.

As the driving force for causing the composition to flow into an area where the foaming process is carried out, the pressure from the aforementioned kneading device may be used, or a machine such a single or multi-screw extruder and a cylinder may be separately used for the foaming process.

<<Expansion Ratio>>

In the foaming process, an expansion ratio of the foam sheet may be adjusted. The method of adjusting the expansion ratio can be selected as appropriate. For example, the expansion ratio can be changed by decreasing a temperature of the discharged resin when discharging the resin from a circular die.

From the viewpoint of cost, the higher the expansion ratio is, the superior the foam is. The expansion ratio is preferably 5 times or higher, more preferably 10 times or higher, even more preferably 20 times or higher, particularly preferably 30 times or higher. On the other hand, when the expansion ratio is 45 times or higher, the strength of the foam is decreased, the value as a general foam member is decreased, and the application of the foam is limited to packaging materials and the like in some cases. For these reasons, the expansion ratio is particularly preferably 10 times or higher and 40 times or lower.

The expansion ratio of the foam sheet is determined according to the following equation.

$$\text{Expansion ratio} = \text{true density } (\rho 0)/\text{bulk density } (\rho 1) \ldots (1)$$

The true density ($\rho 0$) refers to a density of the composition constituting the foam sheet.

Herein, the true density refers to a density of the composition that remains as a final composition, and the true density may be determined from a literature value or by actually measuring a non-foamed compound pellet. The true density of the polylactic acid is about 1.25 g/cm$^3$.

The method of measuring the bulk density is not particularly limited, any bulk density measuring method can be used as appropriate, and for example, the bulk density can be measured by the following method. An outside dimension of a foam sheet that has been left under an environment of a temperature of 23°C and a relative humidity of 50% for 24 hours or longer is measured to determine the bulk volume.

Subsequently, a weight of the foam sheet is measured. The bulk density of the foam sheet is determined by dividing the weight of the foam sheet by the bulk volume.

The bulk density may also be determined as follows.

A bulk density of a foam sheet that has been left under an environment of temperature of 23°C and a relative humidity of 50% for 24 hours or longer is determined by an in-liquid weighing method using an automatic densimeter (e.g. DSG-1 manufactured by TOYO SEKI CO., LTD.). This bulk density was calculated by precisely weighing the foam sheet (g) in atmosphere and then precisely weighing the foam sheet (g) in water according to the following equation.

$$\text{Bulk density } [g/cm^3] = \text{sample weight } [g] \text{ in atmosphere}/\{(\text{sample weight } [g] \text{ in atmosphere - sample weight } [g] \text{ in liquid}) \times \text{liquid density } [g/cm^3]\}$$

Although the numerical value of the expansion ratio of the foam sheet obtained by the above equation (1) is a dimensionless value, the numerical value is indicated by adding "times" to the value from the view point of facilitating understanding. The expansion ratio of "10 times" is equivalent to the simple expression "10".

<<Foam Sheet Forming Device>>

As the foam sheet forming device, for example, the device described as an example in the above explanation for the kneading devices can be used. The kneading device and the foam sheet forming device may be used as one device or as separate devices.

FIG. 2 is a diagram illustrating an example of the foam sheet forming device. For a continuous foam sheet forming device 110, for example, a twin-screw extruder can be used as described above. In the continuous foam sheet forming device 110, for example, raw materials such as a master batch, a polylactic acid and a crosslinking agent are fed to the raw material mixing/melting area a from the first feeding portion 1 and the second feeding portion 2, and mixed/melted. A compressible fluid is fed to the mixed/melted raw materials by the compressible fluid feeding portion 3 in the compressible fluid feeding area b.

Then, the raw materials are kneaded in the kneading area c to obtain a composition. Subsequently, the composition is fed to the heating area d, where the composition is heated and kneaded, then e.g. exposed to the atmosphere to extrusion-foam the composition.

The extrusion-foamed foam sheet 4 is wound up along a mandrel.

In the continuous foam sheet forming device 110, the raw material mixing/melting area a, the compressible fluid feeding area b, and the kneading area c are also referred to as a first extruder, and the heating area d is also referred to as a second extruder.

In this example, the mixed, melted and kneaded raw materials are extruded to the second extruder by the first extruder, and the foam sheet is extrusion-foamed by the second extruder. In the second extruder, for example, a circular die can be used.

In this example, the kneading process is performed by the kneading device and the first extruder of the foam sheet forming device, and the foaming process described below is performed by the second extruder of the foam sheet forming device. However, embodiments of the present invention is not limited to this configuration. For example, the areas where the kneading process and the foaming process are performed can be changed as appropriate.

<Surface adjusting Process>

In the surface adjusting process, the surface of the sheet obtained by the foaming process is adjusted. The surface adjusting process may be referred to as a process of adjusting the irregularity on the sheet surface, a process of adjusting the shape of the sheet surface or the like.

In the surface adjusting process, a surface roughness Sa (i.e. arithmetic average height) is adjusted to 81 μm or higher. The surface roughness Sa of the foam sheet is an index of the irregularity on the sheet surface, and when the surface roughness Sa of the foam sheet is 81 μm or higher, the surface of the foam sheet has a certain degree of irregularity, which improves the cushioning performance.

In addition, when the surface roughness Sa of the foam sheet is 81 μm or higher and the surface of the foam sheet has a certain degree of irregularity, the amount of the raw materials can be reduced, and a foam sheet having a high cushioning performance can be obtained. According to embodiments the present invention, for example, the cushioning performance can be higher than of a conventional sheet having the same thickness, and when the foam sheet according to embodiments of the present invention has a cushioning performance equivalent to that of the conventional sheet, the amount of the raw materials for the foam sheet according to embodiments of the present invention can be smaller than that for the conventional sheet.

Preferably, the foam sheet has a surface roughness Sa of 150 μm or higher. In this case, the cushioning performance is further improved. The upper limit for the surface roughness Sa of the foam sheet can be selected as appropriate, but is preferably 300 μm or lower.

In this case, it can be said that the cushioning performance is ensured.

According to embodiments of the present invention, when one side of the foam sheet is defined as a right face and the other side is defined as a reverse face, the surface roughness Sa on either the right face or the reverse face is 81 μm or higher. The reason why the surface roughness Sa on one surface (one side of the sheet) was set to 81 μm

or higher is because 81 µm or lower of surface roughness Sa was known to deteriorate the cushioning performance.

Both sides of the sheet (both the right face and the reverse face) may have the surface roughness Sa of 81 µm or higher, but if the surface roughness Sa of only one side of the sheet satisfies the above requirements, it is possible to manage both a case of supporting and protecting an object at a point and a case of supporting and protecting an object by the whole sheet face, while using the foam sheet having the high cushioning performance.

The surface roughness Sa is measured using a measuring device (e.g. VR-3200 manufactured by KEYENCE CORPORATION) in accordance with a three-dimensional surface property parameter: ISO 25178. As a measurement method, the surface is photographed at randomly-sampled three points by the above measuring device, and an average value of the three points is defined as the surface roughness Sa (i.e. arithmetic average height).

A specific measurement method is as follows.

[Sample]

The sheet is cut into a 2 cm×2 cm-sized piece, which is stuck to a flat metal plate with a double-sided tape such that the center part of the sheet is not lifted.

[Measurement Conditions]

Magnification: 12x
Measurement condition: Expert
Measurement mode: Super Fine
Measurement direction: Both side directions
Brightness adjustment for measurement: Automatic (80)
Display of missing value and saturation value: ON

[Analysis]

The following analysis is performed using the taken images.
Analysis is performed using an analysis application manufactured by KEYENCE CORPORATION.

[Analysis Conditions]

Image processing: After plane correction over the whole area
Filter setting: No cutoff
Correction of termination effect: Unchecked

The surface roughness is analyzed over the whole area to determine the surface roughness Sa (i.e. arithmetic average height).
The measurement is performed e.g. three times. If multiple measurements are performed, an average value is further determined.
The surface adjusting process can be exemplified by a method of compressing the sheet with a roller member. When compressing the sheet with the roller member, for example, the sheet is passed through between two roller members facing each other. In this case, the surface roughness Sa of the sheet can be adjusted e.g. by adjusting a distance between the two roller members.
When using the roller members, a surface shape of the roller members i.e. a shape of a surface in contact with the foam sheet may be flat or irregular.
FIG. 3 is a diagram illustrating an example of a surface adjusting device 120. FIG. 3 is a diagram also illustrating a process for adjusting the surface irregularity by compressing the sheet with the roller member. In the drawing, a press device 14 having a first roll 11, a second roll 12 and a clearance adjusting device 13 are illustrated. Also, guide rolls 15a and 15b, a winding device 16 and a sheet 17 are illustrated in the drawing.
For adjusting the surface irregularity of the sheet 17, the surface state can be adjusted by adjusting the clearance adjusting device 13. For example, the clearance adjusting device 13 adjusts a gap (also referred to as a clearance or a roll clearance) between the first roll 11 and the second roll 12. When a thicker sheet and a thinner sheet are passed through the same press device 14 to reduce their thicknesses, the thicker sheet tends to be uniform and to decrease in the surface roughness Sa.

Note that the surface irregularity of the sheet can also be adjusted by a winding process. For example, the irregularity can be adjusted depending on a winding speed, a winding amount, a winding force or the like. A distance between the foam sheet forming device and the surface adjusting device and a time from the foaming to the surface treatment can be selected as appropriate.

Since the thickness of the foam sheet also affects the cushioning performance, generally the thicker the sheet is, the better the cushioning performance is. On the other hand, the foam sheet according to embodiments of the present invention has high irregularity, even if the sheet according to embodiments of the present invention has the same thickness as of other sheets, the cushioning performance can be improved.

An average thickness of the foam sheet can be selected as appropriate, but from the viewpoint of ensuring the cushioning performance, the average thickness is preferably 1.51 mm or larger, and from the economic viewpoint, preferably 10 mm or smaller, more preferably 3.40 mm or smaller. Considering these factors, the average thickness of the foam sheet is particularly preferably 1.51 mm or larger and 3.40 mm or smaller.

The method for adjusting the thickness of the foam sheet can be selected as appropriate, and, for example, the thickness may be adjusted by the above clearance adjusting device or winding device. In addition, a thickness adjustment process may be separately provided. The average thickness is calculated by averaging the measurement values at 10 positions e.g. using a caliper.

<Other Processes>

Other processes are not particularly limited as long as the processes can be performed for producing a conventional plastic foam sheet. The process can be selected depending on the intended purpose as appropriate, and, for example, a forming process for processing the composition into a sheet shape, or the like is performed.

Examples of the aforementioned forming process include, but are not limited to, vacuum molding, pressure forming, and press molding.

The forming processes make it possible to obtain a sheet-formed product.

(Product)

The foam sheet according to embodiments of the present invention may be directly used or used as a product. Since the sheet according to embodiments of the present invention is excellent in lightweight property and heat resistance, the sheet is suitably used for food containers and tableware. Also, the sheet is suitable as a heat-resistant food container, but is not limited to such applications. The foam sheet according to embodiments of the present invention may be directly printed with letters or the like before use.

The product produced using the foam sheet according to embodiments of the present invention is not particularly limited and can be modified as appropriate. The product may be produced by processing the foam sheet according to embodiments of the present invention or by using the foam sheet according to embodiments of the present invention and other components. The aforementioned other components are not particularly limited as long as the components can be used for conventional resin products, and can be selected depending on the intended purpose as appropriate.

The foam sheet according to embodiments of the present invention can be processed without particular limitation, and the foam sheet may be subjected to e.g. a process in which the sheet is processed using a mold to obtain a product. The sheet processing method using the mold is not particularly limited, and conventionally-known methods for processing thermoplastic resins can be used, such as vacuum molding, pressure molding, vacuum pressure molding, and press molding.

Examples of the aforementioned products (also referred to as "consumer goods") include bags, packaging containers, trays, tableware, cutlery, stationery, furthermore cushioning materials and the like, as daily commodities. The concept of the products includes not only an original fabric obtained by rolling the sheet as an intermediate for processing a product, and a product as a single body, but also a product including parts made of a product like a handle of a tray or a product like a tray equipped with a handle, and the like.

Examples of the bags include, but are not limited to, plastic bags, shopping bags, and garbage bags.

Examples of the stationery include, but are not limited to, clear files, stickers.

Conventional foam sheets had problems of sheet physical properties such as sheet strength and flexibility due to large and varied foam diameters.

Because of excellent physical properties, the product molded using the foam sheet according to embodiments of the present invention can also be applied to applications other than daily commodities, and can be widely applied to applications such as sheets and packaging materials for industrial materials, agricultural articles, food products, pharmaceuticals, cosmetics, or the like.

The foam sheet according to embodiments of the present invention is useful for applications capable of taking advantage of the biodegradability of the foam sheet, particularly useful as a packaging material for foods, and medical sheets for cosmetics, medicines or the like. The performance of the foam sheet can be expected to be improved by film thinning or the like.

EXAMPLES

Hereinafter, the present invention will be more specifically explained with reference to Examples. However, the present invention should not be construed to be limited to Examples.

(Example 1)

<Preparation of Master Batch>

Using the continuous kneading device 100 illustrated in FIG. 1, a polylactic acid (LX175, manufactured by Total Corbion, melting point: 130°C) at 9.7 kg/hr and a surface-treated silica (R972, manufactured by Aerosil) as the foam core material (filler) at 0.3 kg/hr were fed to the raw material mixing/melting area a such that a total flow rate of the polylactic acid and the foam core material was 10 kg/hr.

Subsequently, 1.00 kg/h (equivalent to 10 % by mass based on the composition) of carbon dioxide as a compressible fluid was fed into the compressible fluid feeding area b. The compressible fluid was kneaded in the kneading area c. Thereby, a [polylactic acid composition precursor containing 3% by mass of foam core material] was obtained.

As for the amount of the fed carbon dioxide, the phrase "based on the composition" means the total amount of the polylactic acid and the foam core material in this specification.

Then, in the molding area e, the [polylactic acid composition precursor containing 3% by mass of foam core material] was extruded in a strand shape toward a water bath and cooled in the water bath, then pelletized with a strand cutter to obtain a master batch containing 3% by mass of foam core material ([3% by mass foam core material master batch]) as a composition precursor.

A temperature in each area was as follows.

The raw material mixing/melting area a and the compressible fluid feeding area b: 190°C
The kneading area c: 150°C
The compressible fluid removing area d: 190°C
The molding area e: 190°C
A pressure in each area was as follows.

From the compressible fluid feeding area b to the kneading area c: 7.0 MPa
The compressible fluid removing area d: 0.5 MPa

<Preparation of Foam Sheet>

Using the continuous foam sheet forming device 110 illustrated in FIG. 2, the [3% by mass foam core material master batch] at a flow rate of 1.67 kg/h, the polylactic acid (LX175, manufactured by Total Corbion, melting point: 130°C) at a flow rate of 8.33 kg/h, and a glycidyl compound (Joncryl ADR4368C, manufactured by BASF SE) as a crosslinking agent at a flow rate of 0.07 kg/hr (equivalent to 0.7% by mass of the total amount of the polylactic acid, the foam core material and the crosslinking agent) were fed into the raw material mixing/melting area a of the first extruder such that the amount of the foam core material is 0.5% by mass based on the polylactic acid.

Subsequently, 0.99 kg/h (equivalent to 10% by mass based on the polylactic acid) of carbon dioxide as the compressible fluid was fed into the compressible fluid feeding area b of the first extruder. These compounds were mixed, melted, kneaded, and fed to the second extruder.

Then, the mixture was kneaded in a heating area d of the second extruder to form a composition (polylactic acid composition). Then, the composition was discharged from a circular die with a slit diameter of 70 mm attached to a distal end of the second extruder at a discharge rate of 10 kg/h and cooled to a resin temperature of 140°C, and the compressible fluid was removed from the polylactic acid composition to extrusion-foam the composition.

The extrusion-foamed cylindrical polylactic acid-based resin foam sheet is arranged along a cooled mandrel, cool-formed by blowing air to an outer surface of the sheet, and cut by a cutter to form a flat sheet. In this way, a foam sheet before subjected to the surface adjustment was obtained.

<Surface Adjustment>

The obtained foam sheet was subjected to a process (surface adjusting process) in which the irregularity on the sheet surface is adjusted using a surface adjusting device illustrated in FIG. 3. A clearance (roll clearance) between the first roll 11 and the second roll 12 was adjusted to 1.51 mm by the clearance adjusting device 13 of the press device 14, and the sheet was passed through between the rolls at a sheet winding speed of 5 m/min. As a result, a foam sheet (foam sheet after subjected to the surface adjustment) having an expansion ratio of 10 times, an average thickness of 1.51 mm, and a surface roughness Sa of 81 was prepared.

<Measurement and Evaluation of Foam Sheet>

The obtained foam sheet was measured and evaluated as follows.

<<Expansion Ratio>>

The expansion ratio of the foam sheet was determined according to the following equation. That means, the expansion ratio was determined by dividing the density (true density $\rho0$) of the composition constituting the foam sheet by the bulk density ($\rho1$).

$$\text{Expansion ratio} = \text{true density } (\rho0)/\text{bulk density } (\rho1)$$

The bulk density was measured as follows. A bulk density of a foam sheet that had been left under an environment of temperature of 23°C and a relative humidity of 50% for 24 hours or longer was determined by an in-liquid weighing method using an automatic densimeter (e.g. DSG-1 manufactured by TOYO SEKI CO., LTD.). This bulk density was calculated by precisely weighing the foam sheet (g) in atmosphere and then precisely weighing the foam sheet (g) in water according to the following equation.

$$\text{Bulk density } [\text{g/cm}^3] = \text{sample weight } [\text{g}] \text{ in atmosphere}/\{(\text{sample weight } [\text{g}] \text{ in}$$
$$\text{atmosphere} - \text{sample weight } [\text{g}] \text{ in liquid}) \times \text{liquid density } [\text{g/cm}^3]\}$$

<<Average Thickness>>

An average thickness was calculated by averaging the measurement values at 10 positions using a caliper (Digimatic Caliper, manufactured by Mitutoyo Corporation).

<<Surface Roughness Sa (arithmetic average height)>>

As for the surface roughness Sa, the surface was photographed at three randomly-sampled points using VR-3200 manufactured by KEYENCE CORPORATION in accordance with a three-dimensional surface property parameter: ISO 25178, and an average value of the surface roughness at the three points was calculated to determine the surface roughness Sa (arithmetic average height). The number of measurements was three. In Example 1, the measurement was performed only on one face of the foam sheet (one side of the foam sheet).

<<Cushioning Performance>>

The cushioning performance of the obtained foam sheet (foam sheet after subjected to the surface adjustment) was evaluated depending on a cushion factor.
The cushion factor was determined from the obtained foam sheet in accordance with JIS Z0235:2002.
A compressive stress of the foam sheet was measured at three or more different points, the cushion factor was determined by dividing each compressive stress by a compression energy (following equation), an average value of the cushion factors was defined as the cushion factor of the foam sheet, and the cushioning performance was evaluated according to the following evaluation criteria. The cushion factor was measured at a compressive stress of 0.1 MPa.
Cushion factor = compressive stress/compression energy per unit volume
The lower the cushion factor value is, the better the function as the cushion sheet is.

[Evaluation Criteria]

Since the cushion factor is dependent on the expansion ratio of the foam sheet, sheets having the same expansion ratio were evaluated. The cushioning performance does not depend on the expansion ratio of the foam sheet, the cushion factor should be lower than 15 and should not be 15 or higher.

In Example 1 as well as the following Examples and Comparative Examples, the expansion ratio of the foam sheet after subjected to the surface adjustment is any of mainly 10 times, 20 times and 40 times, but when the expansion ratio is not any of the above ratios, the evaluation criterion for the expansion ratio that is close to the above ratios is used as a reference. For example, when the expansion ratio is 9 times, an evaluation criterion for the expansion ratio of 10 times is used as a reference, and when the expansion ratio is 42 times, an evaluation criterion for the expansion ratio of 40 times is used as a reference.

- Expansion Ratio of 10 Times -

Good: Cushion factor at a compressive stress of 0.1 MPa is lower than 12
Fair: Cushion factor at a compressive stress of 0.1 MPa is 12 or higher and lower than 15.
Poor: Cushion factor at a compressive stress of 0.1 MPa is 15 or higher

- Expansion Ratio of 20 Times -

Good: Cushion factor at a compressive stress of 0.1 MPa is lower than 8
Fair: Cushion factor at a compressive stress of 0.1 MPa is 8 or higher and lower than 11.
Poor: Cushion factor at a compressive stress of 0.1 MPa is 11 or higher

- Expansion Ratio of 40 Times -

Good: Cushion factor at a compressive stress of 0.1 MPa is lower than 5
Fair: Cushion factor at a compressive stress of 0.1 MPa is 5 or higher and lower than 7.
Poor: Cushion factor at a compressive stress of 0.1 MPa is 7 or higher

(Example 2)

The resin temperature in preparing the foam sheet in Example 1 was changed to 142°C to prepare a sheet with an expansion ratio of 12 times (sheet before subjected to the surface adjustment). Subsequently, in the sheet surface adjusting process, the roll clearance of the device was set to 1.51 mm and the sheet was passed through between the rolls at a rate of 5 m/min to adjust the sheet surface. In this way, a sheet having the expansion ratio of 10 times, the thickness of 1.51 mm and the Sa of 124 (foam sheet after subjected to the surface adjustment) was prepared. The obtained sheet was subjected to the same measurement and evaluation as described above. The measured values and the like of the obtained sheets are listed in the following Table 1. The above description also applies to the subsequent Examples and Comparative Examples.

(Example 3)

The resin temperature in preparing the foam sheet in Example 1 was changed to 144°C to prepare a sheet with an expansion ratio of 10 times (sheet before subjected to the surface adjustment). Subsequently, in the sheet surface adjusting process, the roll clearance of the device was set to 1.51 mm and the sheet was passed through between the rolls at a rate of 5 m/min to adjust the sheet surface. In this way, a sheet having an Sa of 150 (foam sheet after subjected to the surface adjustment) was prepared. The obtained sheet was subjected to the same measurement and evaluation as described above.

(Example 4)

The resin temperature in preparing the foam sheet in Example 1 was changed to 133°C to prepare a sheet with an expansion ratio of 24 times (sheet before subjected to the surface adjustment). Subsequently, in the sheet surface adjusting process, the roll clearance of the device was set to 2.50 mm and the sheet was passed through between the rolls at a rate of 5 m/min to adjust the sheet surface. In this way, a sheet having an Sa of 100 (foam sheet after subjected to the surface adjustment) was prepared. The obtained sheet was subjected to the same measurement and evaluation as described above.

(Example 5)

The resin temperature in preparing the foam sheet in Example 4 was changed to 135°C to prepare a sheet with an expansion ratio of 22 times (sheet before subjected to the surface adjustment). Subsequently, in the sheet surface adjusting process, the roll clearance of the device was set to 2.50 mm and the sheet was passed through between the rolls at a rate of 5 m/min to adjust the sheet surface in the same manner as in Example 4. In this way, a sheet having an Sa of 152 (foam sheet after subjected to the surface adjustment) was prepared. The obtained sheet was subjected to the same measurement and evaluation as described above.

(Example 6)

The resin temperature in preparing the foam sheet in Example 4 was changed to 137°C to prepare a sheet with an expansion ratio of 20 times (sheet before subjected to the surface adjustment). Subsequently, in the sheet surface adjusting process, the roll clearance of the device was set to 2.50 mm and the sheet was passed through between the rolls at a rate of 5 m/min to adjust the sheet surface in the same manner as in Example 4. In this way, a sheet having an Sa of 201 (foam sheet after subjected to the surface adjustment) was prepared. The obtained sheet was subjected to the same measurement and evaluation as described above.

(Example 7)

The resin temperature in preparing the foam sheet in Example 1 was changed to 126°C to prepare a sheet with an expansion ratio of 44 times (sheet before subjected to the surface adjustment). Subsequently, in the sheet surface adjusting process, the roll clearance of the device was set to 3.40 mm and the sheet was passed through between the rolls at a rate of 5 m/min to adjust the sheet surface. In this way, a sheet having an Sa of 162 (foam sheet after subjected to the surface adjustment) was prepared. The obtained sheet was subjected to the same measurement and evaluation as described above.

(Example 8)

The resin temperature in preparing the foam sheet in Example 7 was changed to 128°C to prepare a sheet with an expansion ratio of 42 times (sheet before subjected to the surface adjustment). Subsequently, in the sheet surface adjusting process, the roll clearance of the device was set to 3.40 mm and the sheet was passed through between the rolls at a rate of 5 m/min to adjust the sheet surface in the same manner as in Example 7. In this way, a sheet having an Sa of 248 (foam sheet after subjected to the surface adjustment) was prepared. The obtained sheet was subjected to the same measurement and evaluation as described above.

(Example 9)

The resin temperature in preparing the foam sheet in Example 7 was changed to 130°C to prepare a sheet with an expansion ratio of 40 times (sheet before subjected to the surface adjustment). Subsequently, in the sheet surface adjusting process, the roll clearance of the device was set to 3.40 mm and the sheet was passed through between the rolls at a rate of 5 m/min to adjust the sheet surface in the same manner as in Example 7. In this way, a sheet having an Sa of 300 (foam sheet after subjected to the surface adjustment) was prepared. The obtained sheet was subjected to the same measurement and evaluation as described above.

(Example 10)

The resin temperature in preparing the foam sheet in Example 1 was changed to 146°C to prepare a sheet with an expansion ratio of 9 times (sheet before subjected to the surface adjustment).

Subsequently, in the sheet surface adjusting process, the roll clearance of the device was set to 9.00 mm and the sheet was passed through between the rolls at a rate of 5 m/min to adjust the sheet surface. In this way, a sheet having an Sa of 148 (foam sheet after subjected to the surface adjustment) was prepared. The obtained sheet was subjected to the same measurement and evaluation as described above.

(Example 11)

The resin temperature in preparing the foam sheet in Example 1 was changed to 124°C to prepare a sheet with an expansion ratio of 50 times (sheet before subjected to the surface adjustment). Subsequently, in the sheet surface adjusting process, the roll clearance of the device was set to 3.40 mm and the sheet was passed through between the rolls at a rate of 5 m/min to adjust the sheet surface. In this way, a sheet having an Sa of 298 (foam sheet after subjected to the surface adjustment) was prepared. The obtained sheet was subjected to the same measurement and evaluation as described above.

(Example 12)

The flow rate of the polylactic acid in Example 1 was adjusted so that the polylactic acid content was 97.9% by mass based on the total amount of the organic matters contained in the foam sheet.
The resin temperature in preparing the foam sheet in Example 1 was changed to 126°C to prepare a sheet with an expansion ratio of 42 times (sheet before subjected to the surface adjustment). Subsequently, in the sheet surface adjusting process, the roll clearance of the device was set to 3.40 mm and the sheet was passed through between the rolls at a rate of 5 m/min to adjust the sheet surface. In this way, a sheet having an Sa of 161 (foam sheet after subjected to the surface adjustment) was prepared. The obtained sheet was subjected to the same measurement and evaluation as described above.

(Example 13)

The resin temperature in preparing the foam sheet in Example 1 was changed to 144°C to prepare a sheet with an expansion ratio of 13 times (sheet before subjected to the surface adjustment). Subsequently, in the sheet surface adjusting process, the roll clearance of the device was set to 1.40 mm and the sheet was passed through between the rolls at a rate of 5 m/min to adjust the sheet surface. In this way, a sheet having an Sa of 81 (foam sheet after subjected to the surface adjustment) was prepared. The obtained sheet was subjected to the same measurement and evaluation as described above.

(Example 14)

The resin temperature in preparing the foam sheet in Example 1 was changed to 124°C to prepare a sheet with an expansion ratio of 44 times (sheet before subjected to the surface adjustment). Subsequently, in the sheet surface adjusting process, the roll clearance of the device was set to 3.50 mm and the sheet was passed through between the rolls at a rate of 5 m/min to adjust the sheet surface. In this way, a sheet having an Sa of 299 (foam sheet after subjected to the surface adjustment) was prepared. The obtained sheet was subjected to the same measurement and evaluation as described above.

(Example 15)

The flow rate of the polylactic acid in Example 1 was adjusted so that the polylactic acid content was 98.7% by mass based on the total amount of the organic matters contained in the foam sheet. The flow rate of the filler was adjusted so that the filler content was 0.6% by mass based on the foam sheet.
The resin temperature in preparing the foam sheet in Example 1 was changed to 135°C to prepare a sheet with an expansion ratio of 22 times (sheet before subjected to the surface adjustment). Subsequently, in the sheet surface adjusting process, the roll clearance of the device was set to 2.50 mm and the sheet was passed through between the rolls at a rate of 5 m/min to adjust the sheet surface. In this way, a sheet having an Sa of 152 (foam sheet after subjected to the surface adjustment) was prepared. The obtained sheet was subjected to the same measurement and evaluation as described above.

(Example 16)

The resin temperature in preparing the foam sheet in Example 1 was changed to 131°C to prepare a sheet with an expansion ratio of 40 times (sheet before subjected to the surface adjustment). Subsequently, in the sheet surface adjusting process, the roll clearance of the device was set to 3.40 mm and the sheet was passed through between the rolls at a rate of 5 m/min to adjust the sheet surface. In this way, a sheet having an Sa of 310 (foam sheet after subjected to the surface adjustment) was prepared. The obtained sheet was subjected to the same measurement and evaluation as described above.

(Comparative Example 1)

The resin temperature in preparing the foam sheet in Example 1 was changed to 138°C to prepare a sheet with an expansion ratio of 15 times (sheet before subjected to the surface adjustment). Subsequently, in the sheet surface adjusting process, the roll clearance of the device was set to 1.51 mm and the sheet was passed through between the rolls at a rate of 5 m/min to adjust the sheet surface. In this way, a sheet having an Sa of 75 (foam sheet after subjected to the surface adjustment) was prepared. The obtained sheet was subjected to the same measurement and evaluation as described above.

(Comparative Example 1)

The resin temperature in preparing the foam sheet in Example 1 was changed to 138°C to prepare a sheet with an expansion ratio of 15 times (sheet before subjected to the surface adjustment). Subsequently, in the sheet surface adjusting process, the roll clearance of the device was set to 1.51 mm and the sheet was passed through between the rolls at a rate of 5 m/min to adjust the sheet surface. In this way, a sheet having an Sa of 75 (foam sheet after subjected to the surface adjustment) was prepared. The obtained sheet was subjected to the same measurement and evaluation as described above.

(Comparative Example 3)

The resin temperature in preparing the foam sheet in Example 1 was changed to 125°C to prepare a sheet with an expansion ratio of 48 times (sheet before subjected to the surface adjustment). Subsequently, in the sheet surface adjusting process, the roll clearance of the device was set to 3.40 mm and the sheet was passed through between the rolls at a rate of 5 m/min to adjust the sheet surface. In this way, a sheet having an Sa of 78 (foam sheet after subjected to the surface adjustment) was prepared. The obtained sheet was subjected to the same measurement and evaluation as described above.

The above Examples and Comparative Examples are presented in the following Table 1.

Table 1

| | Resin type | Ratio of PLA resin [% by mass] | Filler [% by mass] | Cross-linking agent [% by mass] | Resin temperature in preparing the foam sheet [°C] | Expansion ratio before surface adjustment [times] | Thickness before surface adjustment [mm] | Clearance [mm] | Expansion ratio after surface adjustment [times] | Thickness after surface adjustment [mm] | Surface roughness Sa [μm] | Cushion factor | Cushioning performance |
|---|---|---|---|---|---|---|---|---|---|---|---|---|---|
| Example 1 | LX175 | 98.8 | 0.5 | 0.7 | 140 | 13 | 1.65 | 1.51 | 10 | 1.51 | 81 | 13 | Fair |
| Example 2 | LX175 | 98.8 | 0.5 | 0.7 | 142 | 12 | 1.57 | 1.51 | 10 | 1.51 | 124 | 12 | Fair |
| Example 3 | LX175 | 98.8 | 0.5 | 0.7 | 144 | 10 | 1.50 | 1.51 | 10 | 1.51 | 150 | 11 | Good |
| Example 4 | LX175 | 98.8 | 0.5 | 0.7 | 133 | 24 | 2.75 | 2.50 | 20 | 2.50 | 100 | 8 | Fair |
| Example 5 | LX175 | 98.8 | 0.5 | 0.7 | 135 | 22 | 2.65 | 2.50 | 20 | 2.50 | 152 | 7 | Good |
| Example 6 | LX175 | 98.8 | 0.5 | 0.7 | 137 | 20 | 2.50 | 2.50 | 20 | 2.50 | 201 | 6 | Good |
| Example 7 | LX175 | 98.8 | 0.5 | 0.7 | 126 | 44 | 3.85 | 3.40 | 40 | 3.40 | 162 | 5 | Fair |
| Example 8 | LX175 | 98.8 | 0.5 | 0.7 | 128 | 42 | 3.65 | 3.40 | 40 | 3.40 | 248 | 4.5 | Good |
| Example 9 | LX175 | 98.8 | 0.5 | 0.7 | 130 | 41 | 3.50 | 3.40 | 40 | 3.40 | 300 | 4 | Good |
| Example 10 | LX175 | 98.8 | 0.5 | 0.7 | 146 | 9 | 1.51 | 9.00 | 9 | 1.51 | 148 | 12 | Fair |
| Example 11 | LX175 | 98.8 | 0.5 | 0.7 | 124 | 50 | 4.00 | 3.40 | 42 | 3.40 | 298 | 5.4 | Fair |
| Example 12 | LX175 | 97.5 | 0.5 | 2.0 | 126 | 42 | 3.86 | 3.40 | 40 | 3.40 | 161 | 6 | Fair |
| Example 13 | LX175 | 98.8 | 0.5 | 0.7 | 144 | 13 | 1.52 | 1.40 | 10 | 1.40 | 81 | 14 | Fair |
| Example 14 | LX175 | 98.8 | 0.5 | 0.7 | 124 | 44 | 4.00 | 3.50 | 40 | 3.50 | 299 | 5.2 | Fair |
| Example 15 | LX175 | 98.7 | 0.6 | 0.7 | 135 | 22 | 2.65 | 2.50 | 20 | 2.50 | 152 | 8.1 | Fair |
| Example 16 | LX175 | 98.8 | 0.5 | 0.7 | 131 | 40 | 3.40 | 3.40 | 40 | 3.40 | 310 | 5.1 | Fair |
| Comparative Example 1 | LX175 | 98.8 | 0.5 | 0.7 | 138 | 15 | 1.75 | 1.51 | 10 | 1.51 | 75 | 17 | Poor |
| Comparative Example 2 | LX175 | 98.8 | 0.5 | 0.7 | 131 | 27 | 2.50 | 2.50 | 20 | 2.50 | 75 | 12 | Poor |
| Comparative Example 3 | LX175 | 98.8 | 0.5 | 0.7 | 125 | 48 | 4.00 | 3.40 | 40 | 3.40 | 78 | 7 | Poor |

**Claims**

1. A foam sheet comprising a composition containing an aliphatic polyester resin, the foam sheet having a surface roughness Sa of 81 $\mu$m or higher.

2. The foam sheet according to claim 1, the foam sheet having an expansion ratio of 10 times or higher and 40 times or lower, the expansion ratio determined according to the following equation.

$$\text{Expansion ratio} = \text{true density } (\rho 0)/\text{bulk density } (\rho 1)$$

3. The foam sheet according to claim 1 or 2, the aliphatic polyester resin comprising a polylactic acid, and a proportion of the polylactic acid to all organic matters contained in the foam sheet being 98% by mass or more.

4. The foam sheet according to any one of claims 1 to 3, the foam sheet having an average thickness of 1.51 mm or larger and 3.40 mm or smaller.

5. The foam sheet according to any one of claims 1 to 4, the foam sheet further comprising 0.5% by mass or less of a foam core material.

6. The foam sheet according to any one of claims 1 to 5, the foam sheet having a surface roughness Sa of 300 $\mu$m or lower.

7. The foam sheet according to any one of claims 1 to 6, the foam sheet having a right face and a reverse face, either of which having a surface roughness Sa of 81 $\mu$m or higher.

8. A product comprising the foam sheet according to any one of claims 1 to 7.

9. The product according to claim 8, the product being at least one selected from bags, packaging containers, tableware, cutlery, stationery, and cushioning materials.

10. A method for producing a foam sheet, the method comprising:

    kneading an aliphatic polyester resin at a temperature lower than a melting point of the aliphatic polyester resin in the presence of a compressible fluid to obtain a composition;
    removing the compressible fluid to foam the composition to form a sheet; and
    adjusting a surface of the sheet to have a surface roughness Sa of 81 $\mu$m or higher.

11. The method for producing a foam sheet according to claim 10, the compressible fluid being carbon dioxide.

12. The method for producing a foam sheet according to claim 10 or 11, the adjusting comprising compressing the sheet using a roller member.

# FIG. 1

# FIG. 2

# FIG. 3

Europäisches
Patentamt
European
Patent Office
Office européen
des brevets

# EUROPEAN SEARCH REPORT

Application Number

EP 22 18 2578

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/027247 A1 (UEDA KAZUE [JP] ET AL) 1 February 2007 (2007-02-01) * examples * | 1-12 | INV. C08J9/12 |
| X | US 2009/258175 A1 (MATSUOKA FUMIO [JP] ET AL) 15 October 2009 (2009-10-15) * examples * | 1-12 | |
| X | US 2014/295169 A1 (KANG CHANG WON [KR] ET AL) 2 October 2014 (2014-10-02) * examples * | 1-9 | |
| X | CN 110 615 976 A (TIANJIN DALIN NEW MATERIAL TECH CO LTD) 27 December 2019 (2019-12-27) * examples * | 1-9 | |

TECHNICAL FIELDS
SEARCHED      (IPC)

C08J

The present search report has been drawn up for all claims

| Place of search | Date of completion of the search | Examiner |
|---|---|---|
| The Hague | 14 November 2022 | Rinkel, Bert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 18 2578

This annex lists the patent family members relating to the patent documents cited in  the above-mentioned European search report.
The members are as contained in the European Patent Office EDP file on
The European Patent Office is in no way liable for these particulars which are merely given for the purpose of information.

14-11-2022

| Patent document cited in search report | | Publication date | Patent family member(s) | | Publication date |
|---|---|---|---|---|---|
| US 2007027247 | A1 | 01-02-2007 | CN | 1771291 A | 10-05-2006 |
| | | | DE | 60314783 T2 | 10-04-2008 |
| | | | EP | 1624024 A1 | 08-02-2006 |
| | | | JP | 4353902 B2 | 28-10-2009 |
| | | | JP | WO2004099315 A1 | 13-07-2006 |
| | | | KR | 20060036905 A | 02-05-2006 |
| | | | US | 2007027247 A1 | 01-02-2007 |
| | | | WO | 2004099315 A1 | 18-11-2004 |
| US 2009258175 | A1 | 15-10-2009 | CN | 101268125 A | 17-09-2008 |
| | | | EP | 1944333 A1 | 16-07-2008 |
| | | | JP | 5264176 B2 | 14-08-2013 |
| | | | JP | WO2007052543 A1 | 30-04-2009 |
| | | | KR | 20080072815 A | 07-08-2008 |
| | | | US | 2009258175 A1 | 15-10-2009 |
| | | | WO | 2007052543 A1 | 10-05-2007 |
| US 2014295169 | A1 | 02-10-2014 | CN | 104024314 A | 03-09-2014 |
| | | | EP | 2792704 A1 | 22-10-2014 |
| | | | JP | 6019131 B2 | 02-11-2016 |
| | | | JP | 2015500386 A | 05-01-2015 |
| | | | KR | 20130067119 A | 21-06-2013 |
| | | | RU | 2014121680 A | 10-02-2016 |
| | | | TW | 201323493 A | 16-06-2013 |
| | | | US | 2014295169 A1 | 02-10-2014 |
| | | | WO | 2013089387 A1 | 20-06-2013 |
| CN 110615976 | A | 27-12-2019 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019073873 A

**Non-patent literature cited in the description**

- Structure, Physical Properties, and Biodegradability of Aliphatic Polyesters. *KOBUNSHI (POLYMERS, Japan),* 2001, vol. 50 (6), 374-377